# EUROPEAN PATENT APPLICATION

(11) **EP 3 660 345 A1**
(43) Date of publication of application: **03.06.2020**
(21) Application number: 18380019.2
(22) Date of filing: 28.11.2018
(51) Int. Cl.: F16C 35/06, F16C 35/04, F16C 19/54, F03D 80/70, F03D 9/25

(54) **WIND TURBINE BEARING ASSEMBLY**

(71) Applicant: Siemens Gamesa Renewable Energy Innovation & Technology, S.L., 31621 Sarriguren Navarra (ES)
(72) Inventor: Albizua Macua, Juan, 31621 Sarriguren (ES); Erdoiza Lejarreta, Joseba, 48170 Zamudio (ES); Repiso Barrera, Roberto, 31621 Sarriguren (ES); De Carlos Alegre, Hugo, 31621 Sarriguren (ES)
(74) Representative: Aspacher, Karl-Georg

(57) **Abstract**

The invention describes a bearing assembly (1) of a wind turbine (2), which bearing assembly (1) comprises a front bearing (11) for a rotor shaft (20); a rear bearing (12) for the rotor shaft (20); and a plurality of bearing connectors (13A, 13B, 13C) arranged between the front bearing (11) and the rear bearing (12), wherein one end (131) of a bearing connector (13A, 13B, 13C) is secured to the front bearing (11), and the other end (132) of the bearing connector (13A, 13B, 13C) is secured to the rear bearing (11). The invention further describes a wind turbine (2), and a method of designing a bearing assembly (1).

## Description

The invention describes a wind turbine bearing assembly; a wind turbine; and a method of manufacturing a bearing assembly.

A wind turbine generally comprises an aerodynamic rotor with several rotor blades. In a wind turbine with gearbox, the aerodynamic rotor turns a low-speed rotor shaft. The gearbox performs rotatory speed conversion between the low-speed rotor shaft and a high-speed generator rotor. During operation of the wind turbine, vibrations may develop and can lead to stress damage or failure in components of the drive train. For safe and efficient operation of such a generator, it is therefore very important to ensure efficient transfer of loading forces between the low-speed rotor shaft and any supporting structure, for example a machine bed. Usually, the low-speed rotor shaft of such a wind turbine is held by a front bearing (near the drive end or hub end of the wind turbine) and a rear bearing (near the gearbox). Each bearing is securely mounted to a supporting structure such as a machine bed, usually by means of diametrically opposed mounting points. A mounting point may also comprise some kind of damping means to ensure that vibrations are damped and not transferred between bearing and machine bed.

It is important to supress torsion of the rotor shaft resulting from differences in torque at the outer and inner ends of the low-speed rotor shaft. For this reason, it is known from the prior art to provide a "complete bearing arrangement", i.e. an arrangement in which the front bearing and the rear bearing are contained in a bearing housing that is designed to provide the desired degree of rigidity and stiffness. Such a bearing housing is generally shaped to extend over the front and rear bearings and to exactly fit about the front bearing and the second bearing. The bearing housing generally also comprises the necessary interface for mounting the entire assembly to the machine bed. While this complete bearing arrangement ensures favourable load transfer and therefore also efficient operation of the generator, the bearing housing must be designed with very high tolerance requirements. Generally, a specific generator design will also require a specific bearing housing design. This is because the shape of the bearing housing will depend directly on the diameters of the front and rear bearings, and also on the distance between front and rear bearings. For example, the front bearing diameter of one generator of a series may be a few cm larger (or smaller) than the front bearing diameter of another generator of the same series. In that case, a bearing housing of one generator of a series will not be useable for another generator of the same series. Therefore, generators that differ only slightly in component design require distinct bearing housings. This adds significantly to the manufacturing costs of a generator series.

Furthermore, a bearing housing that is dimensioned to contain a front and rear bearing will be large and cumbersome. This adds to transport, handling and installation costs. Another drawback of such a complete bearing arrangement is that the housing must generally be removed in order to obtain access to a bearing, for example to perform maintenance or repair tasks.

It is therefore an object of the invention to provide an improved way of supporting the rotor shaft to overcome the problems outlined above.

This object is achieved by the wind turbine bearing assembly of claim 1; by the wind turbine of claim 10; and by the method of claim 12 of designing a bearing assembly.

According to the invention, the bearing assembly comprises a front bearing for a rotor shaft; a rear bearing for the rotor shaft; and a plurality of bearing connectors arranged between the front bearing and the rear bearing, wherein each bearing connector has two outer ends, and wherein one outer end of a bearing connector is secured to the front bearing, and the other outer end of that bearing connector is secured to the rear bearing.

An advantage of the bearing assembly according to the invention is that it permits a modular approach and can contribute to significantly reduced construction costs. Instead of realizing front and rear bearings in a single unit as known from the prior art, the inventive approach is to connect the front and rear bearings using several bearing connectors. Such connectors may also be referred to as ties or stays. Since the purpose of the bearing connectors is to provide a favourably "stiff" connection between front and rear bearings, i.e. to reduce or minimize the relative torsional movement between front and rear bearings, the bearing connectors may also be referred to as "stiffening elements" or simply "stiffeners" in the following. In the inventive bearing assembly, it is possible to provide different types of bearing connectors which can be used to connect front and rear bearings in different generator designs. The cost of manufacturing different types bearing connector is significantly lower than the cost of manufacturing different complete bearing arrangements.

According to the invention, the wind turbine has a drive train comprising an aerodynamic rotor arranged to turn a low-speed rotor shaft; and further comprises an embodiment of the inventive bearing assembly arranged to support the low-speed rotor shaft.

The inventive wind turbine can be manufactured with less overall costs than a conventional wind turbine with a combined bearing assembly. The costs of maintenance and repair to the bearings can also be significantly reduced. According to the invention, the method of designing such a bearing assembly comprises the steps of obtaining design parameters of a wind turbine generator; obtaining construction parameters of physically separate front and rear bearings for the generator rotor shaft; determining expected bearing loads during operation of the generator; and determining design parameters of the plurality of bearing connectors arranged between the front bearing and the rear bearing.

Particularly advantageous embodiments and features of the invention are given by the dependent claims, as revealed in the following description. Features of different claim categories may be combined as appropriate to give further embodiments not described herein.

In the following, without restricting the invention in any way, it may be assumed that each bearing is mounted to a supporting structure such as a machine bed by a pair of diametrically opposed suspension points. This arrangement is referred to as a "four-point suspension".

As explained above, various dimensions may differ between generators of the same series or different series. Relevant bearing parameters (i.e. bearing construction parameters that are relevant to the design of the stiffener elements) may be the front/rear bearing diameters and the distance between front bearing and rear bearing. Therefore, in a particularly preferred embodiment of the invention, design parameters of a bearing connector are chosen on the basis of any such relevant bearing construction parameter(s). For example, significant design parameters of a bearing connector can be the minimum mass of a bearing connector and material properties of the material from which the bearing connector is to be made.

There may be various ways of establishing the necessary design parameters. In one preferred embodiment of the invention, the method comprises determining the form of a virtual cylinder extending between the front bearing and the rear bearing, and then basing the shape of a bearing connector on the form of that virtual cylinder. For example, a virtual cylinder extending between the front and rear bearings can be divided into a number of virtual segments. The virtual cylinder may have an overall circular or polygonal cross-section, and the cross-sectional shape can be used as a basis for deciding on the shape of a stiffener. The virtual cylinder can be given a thickness or wall depth, which can be used as a basis for the thickness of a stiffener.

Knowing the relevant design characteristics of the generator (e.g. rotor shaft speed, torque, bearing rigidity etc.), and assuming various parameters such as material, wall thickness etc., it is possible to compute or simulate the minimum dimensions of each segment. For example, using a suitable tool such as finite element analysis, the effect of removing sections or volumes from the virtual cylinder can be simulated in order to reach a favourable stiffener design that will fulfil the load-transfer requirements. Similarly, the effects of altering the thickness in one or more regions of the virtual cylinder can be simulated to arrive at an optimal stiffener shape.

When basing the shape of a stiffener on a cylindrical form, the resulting stiffener can have a correspondingly curved or arc shape. Of course, in a simpler alternative, a stiffener can be formed as a flat or straight part (derived from a polygonal virtual cylinder, for example), which may be significantly easier to manufacture than a curved part.

The rigidity of a stiffener can be increased by adding material as appropriate. For example, a rib may be attached to a stiffener in a direction parallel to the rotational axis of the rotor. Equally, the rigidity of a stiffener can be increased by forming the stiffener to have a T-shaped cross section. With such a cross-section, a stiffener can be made using less material than a comparable stiffener with a rectangular cross-section.

The number of stiffener elements can be chosen on the basis of various other factors or parameters. For example, the number of stiffeners can be chosen on the basis of the rated torque, rotor shaft speed, etc., of a generator. The front and rear bearings of a relatively "small" generator may be connected using two or three stiffeners, for example, while the front and rear bearings of a relatively "large" generator may require four or more stiffeners.

In a preferred embodiment of the invention, the plurality of bearing connectors comprises a set of identical bearing connectors. For example, three or four identical stiffeners may be provided to join a specific pair of front and rear bearings. Installation costs can be minimized by not having to distinguish between different stiffeners when connecting the front and rear bearings.

A stiffener can be mounted between the front and rear bearings by using appropriate fasteners (e.g. bolts) to secure the outer ends of the stiffener to the bearings. To this end, in a preferred embodiment of the invention, an end of a bearing connector comprises a number of through-holes to receive fasteners for securing the bearing connector to a bearing. In a further preferred embodiment of the invention, a stiffener has a curved end to match the curvature of a bearing. Preferably, the curvature is such that the same stiffener can be mounted to bearings with different diameters.

Other objects and features of the present invention will become apparent from the following detailed descriptions considered in conjunction with the accompanying drawings. It is to be understood, however, that the drawings are designed solely for the purposes of illustration and not as a definition of the limits of the invention.
- Fig 1: shows an embodiment of the inventive bearing assembly;
- Fig 2: shows a detail of the bearing assembly of Fig 1;
- Figs 3 and 4: show alternative embodiments of the inventive bearing assembly;
- Fig 5: shows a view into an embodiment of a partially assembled wind turbine according to the invention;
- Fig 6: is a simplified block diagram indicating steps of the inventive method;
- Fig 7: shows a prior art bearing arrangement.

In the diagrams, like numbers refer to like objects throughout. Objects in the diagrams are not necessarily drawn to scale.

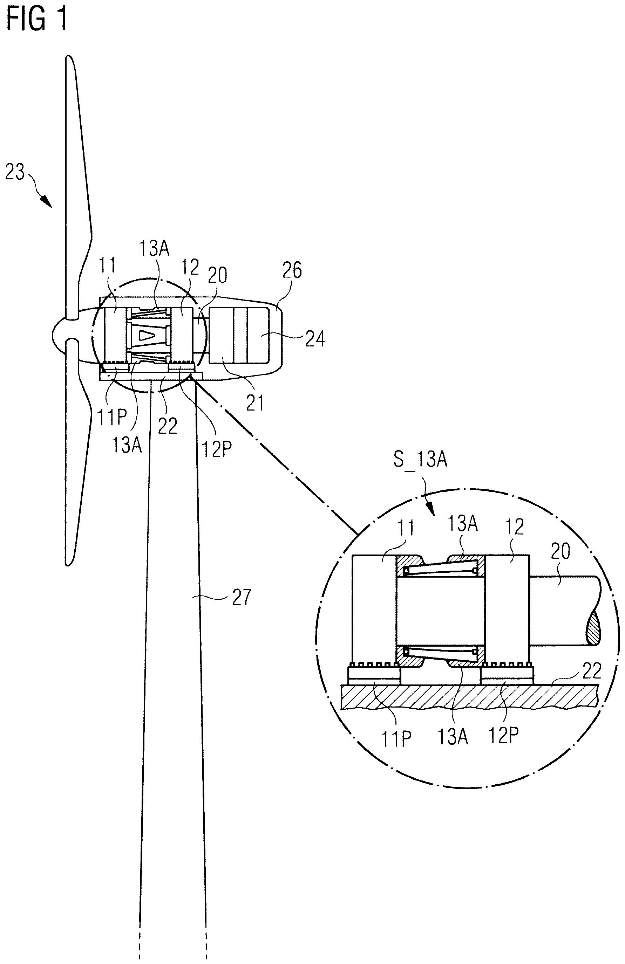

Fig 1 shows an embodiment of the inventive bearing assembly 1 in a wind turbine 2. The wind turbine 2 has an aerodynamic rotor 23 comprising rotor blades that turn a rotor shaft 20. The rotor blades 23 are mounted to a spinner or hub, which is arranged at one end of a nacelle 26. A gearbox 21 converts the low-speed rotation of the rotor shaft 20 to a high-speed rotation of a generator rotor. The bearing assembly 1 is used to support and contain the rotor shaft 20 of the wind turbine generator between the aerodynamic rotor 23 (at the front of the drive train) and the gearbox 21 and generator 24 (at the rear of the drive train). The bearing assembly 1 comprises a front bearing 11 and a rear bearing 12. The front bearing 11 is mounted to a machine bed 22 at two diametrically opposed suspension points 11P (on opposite sides of the rotor shaft; only one suspension point 11P of the front bearing 11 can be seen in the drawing). Similarly, the rear bearing 12 is mounted to the machine bed 22 at two diametrically opposed suspension points 12P. During operation of the wind turbine, it is very important to ensure that loads are evenly and reliably transferred from the bearings to the machine bed 22 via the two pairs of suspension points 11P, 12P.

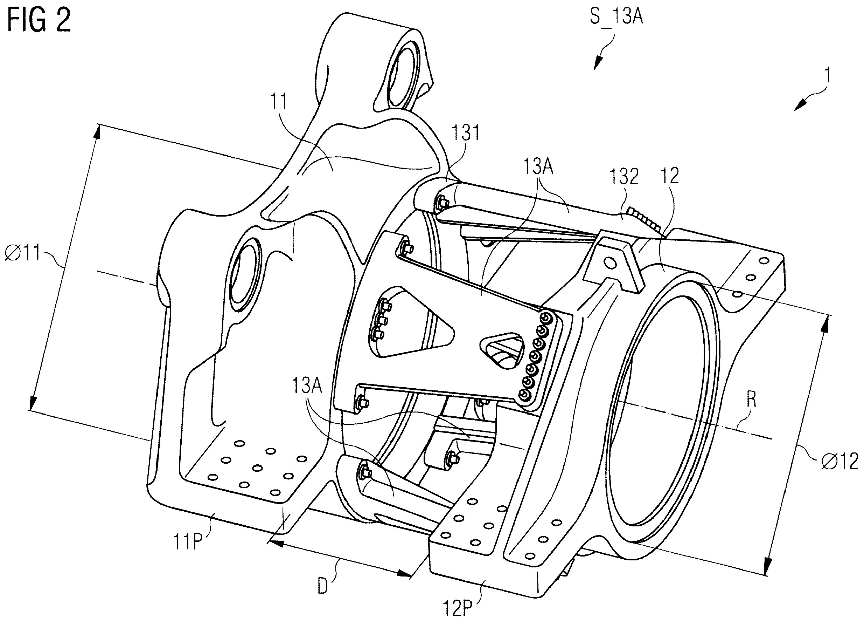

In the inventive bearing assembly 1, the front bearing 11 and rear bearing 12 are connected by a set S_13A of stiffeners 13A. Each stiffener 13A of the set S_13A shown in this diagram is fastened at one end to the front bearing 11 and at the other end to the rear bearing 12 to mechanically connect the front and rear bearings 11, 12 as shown in in Fig 2. Bolts can be inserted through holes in outer ends 131, 132 of a stiffener in order to fasten the stiffener to the bearings 11, 12. In this embodiment, the stiffener set S_13A comprises several stiffeners 13A evenly distributed about the space between the front and rear bearings 11, 12. The material and dimensions of the stiffeners 13A are chosen on the basis of the generator construction, and also on the basis of the expected loads to be transferred to the suspension points. The stiffeners 13A shown in this embodiment are not limited to connecting the front and rear bearings with the bearing diameters 011, 012 but can be used to join bearings with larger or smaller diameters. Similarly, the bearing separation D shown here is bridged by the set of stiffeners 13A. A slightly longer or shorter distance could be bridged simply by using an alternative set of slightly longer or shorter stiffeners, etc.

The set of stiffeners 13A shown in Fig 1 serve in a specific generator design, i.e. for a generator with a certain power rating. As explained above, parameters such as rotor shaft diameter and/or distance between the front bearing 11 and rear bearing 21 can differ between generator types. Similarly, the expected loads arising during operation can depend on the power rating of a generator.

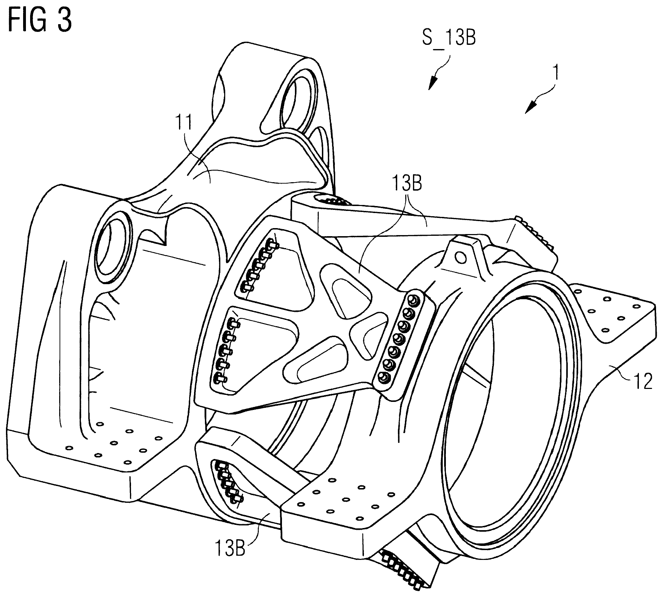

Fig 3 shows a further embodiment of the inventive bearing assembly 1. Here, the bearing assembly 1 is used in a generator with a larger power rating than the generator of Fig 1, and implements a different set of stiffeners 13B. In this embodiment, four stiffeners 13B are used, and the stiffeners 13B are thicker than the stiffeners 13A of Fig 1. This stiffener set S_13B is characterized by a greater material strength, and can transfer higher loads to the suspension points 11P, 12P during operation of the wind turbine.

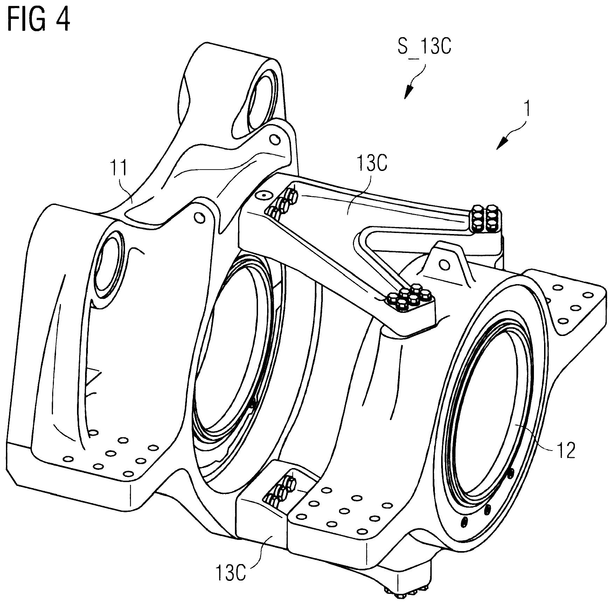

Fig 4 shows a further embodiment of the inventive bearing assembly 1. Here, the bearing assembly 1 is used in a generator with a lower power rating than the generator of Fig 1, and implements a different stiffener set S_13C. In this embodiment, only two stiffeners 13C are used. This smaller number of stiffeners is sufficient to transfer loads to the suspension points 11P, 12P during operation of the wind turbine.

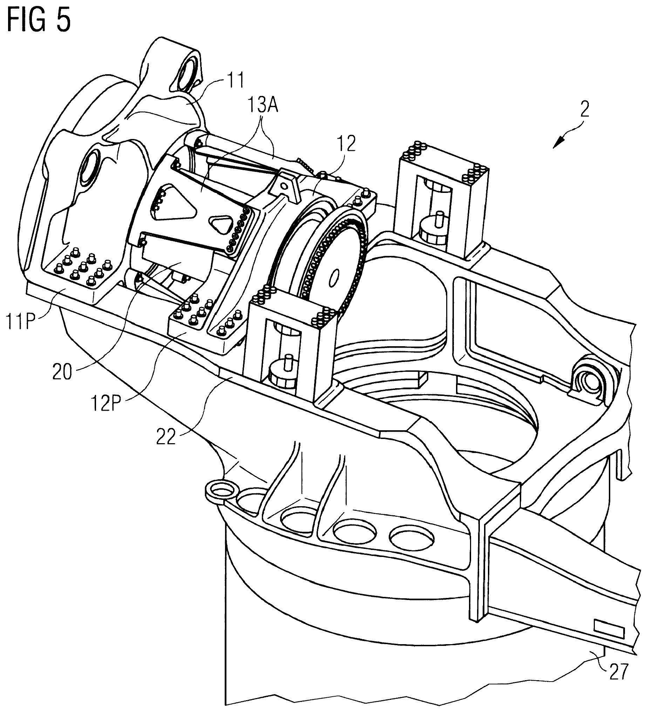

Fig 5 shows a view into a partially assembled wind turbine 2. The diagram shows that, to ensure safe and efficient operation of the generator components, the rotor shaft 20 will be held in place by a front bearing and a rear bearing, and these are each mounted to the machine bed 22 using diametrically opposed suspension points 11P, 12P. The diagram also shows a set of stiffeners 13A that mechanically connect the front and rear bearings 11, 12 in an embodiment of the invention. Depending on the generator design, a different set of stiffeners could be used to ensure the required load transfer behaviour.

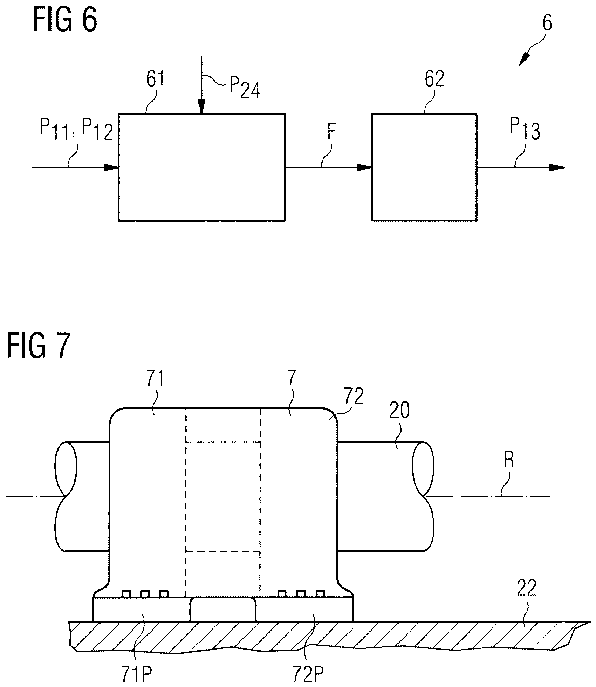

Fig 6 is a simplified block diagram indicating steps of the inventive method. Design parameters P₂₄ of a wind turbine generator are obtained, along with construction parameters P₁₁, P₁₂ of physically separate front and rear bearings for the generator's rotor shaft. With these known parameters, it is possible to compute the expected loads or forces F that will have to be withstood by the bearing suspension. Using this information, it is possible to determine design parameters P₁₃ of a stiffener or stiffener set that will be used to connect or join the front and rear bearings. A generator design parameter P₂₄ can be rated power, rated torque, etc. A bearing construction parameter P₁₁ P₁₂ can be bearing diameter, bearing mass, bearing separation, etc. A stiffener design parameter P₁₃ can be mass, material shear strength, minimum required number, etc. A design module 6 can comprise a computation block 61 for determining the expected loads or forces F and a simulation or modelling unit 62 for determining design parameters P₁₃ of a suitable stiffener set.

Fig 7 shows a prior art bearing arrangement. Here also, the diagram shows parts of a wind turbine of the type described in Fig 1. In the prior art, a front bearing 71 and a rear bearing 72 are provided in a shared bearing housing 7. The bearing housing 7 is necessary in order to transfer loads through the suspension points 71P, 72P into the machine bed 22. Because the dimensions of the bearings 71, 72 and/or the distance between bearings may be different for different generator designs, the dimensions of the bearing housing will be different in each case. This adds considerably to the overall cost of manufacture.

Although the present invention has been disclosed in the form of preferred embodiments and variations thereon, it will be understood that numerous additional modifications and variations could be made thereto without departing from the scope of the invention.

For the sake of clarity, it is to be understood that the use of "a" or "an" throughout this application does not exclude a plurality, and "comprising" does not exclude other steps or elements.

## Claims

1. A bearing assembly (1) of a wind turbine (2), which bearing assembly (1) comprises
- a front bearing (11) for a rotor shaft (20);
- a rear bearing (12) for the rotor shaft (20); and
- a plurality of bearing connectors (13A, 13B, 13C) arranged between the front bearing (11) and the rear bearing (12), wherein one end (131) of a bearing connector (13A, 13B, 13C) is secured to the front bearing (11), and the other end (132) of the bearing connector (13A, 13B, 13C) is secured to the rear bearing (11).

2. A bearing assembly according to claim 1, wherein the dimensions of a bearing connector (13A, 13B, 13C) are chosen on the basis of a bearing dimension (Ø11, Ø12) and/or a bearing mass and/or a distance (D) between the front and rear bearings (11, 12) and/or a generator rated power.

3. A bearing assembly according to claim 1 or claim 2, wherein the number of bearing connectors (13A, 13B, 13C) is chosen on the basis of a bearing dimension (Ø11, Ø12) and/or a distance (D) between the front and rear bearings (11, 12) and/or a generator rated power.

4. A bearing assembly according to any of the preceding claims, wherein the plurality of bearing connectors (13A, 13B, 13C) comprises a set (S_13A, S_13B, S_13C) of identical bearing connectors (13A, 13B, 13C).

5. A bearing assembly according to any of the preceding claims, wherein the shape of a bearing connector (13A, 13B, 13C) is based on the form of a virtual cylinder extending between the front bearing (11) and the rear bearing (12).

6. A bearing assembly according to any of the preceding claims, wherein a bearing connector (13A, 13B, 13C) comprises a curved end (131, 132) shaped on the basis of a variety of bearing diameters.

7. A bearing assembly according to any of the preceding claims, wherein an end (131, 132) of a bearing connector (13A, 13B, 13C) comprises a number of through-holes to receive fasteners for securing the bearing connector (13A, 13B, 13C) to a bearing (11, 12).

8. A bearing assembly according to any of the preceding claims, wherein the front bearing (11) is mounted to the machine bed (22) by a pair of diametrically opposed suspension points (11P).

9. A bearing assembly according to any of the preceding claims, wherein the rear bearing (12) is mounted to the machine bed (22) by a pair of diametrically opposed suspension points (12P).

10. A wind turbine (2) comprising
- an aerodynamic rotor (23) arranged to turn a low-speed rotor shaft (20); and
- a bearing assembly (1) according to any of claims 1 to 9 arranged about the low-speed rotor shaft (20).

11. A wind turbine according to claim 10, wherein the front bearing (11) is arranged at the drive end of the rotor shaft (20), and the rear bearing (12) is arranged at the gearbox end of the rotor shaft (20).

12. A method of designing a bearing assembly (1) according to any of claims 1 to 10, which method comprises
- obtaining design parameters (P₂₄) of a wind turbine generator (24);
- obtaining construction parameters (P₁₁, P₁₂) of physically separate front and rear bearings (11, 12) for the generator rotor shaft (20);
- determining expected bearing loads (F) during operation of the generator (24); and
- determining design parameters (P₁₃) of the plurality of bearing connectors (13A, 13B, 13C) arranged between the front bearing (11) and the rear bearing (12).

13. A method according to claim 12, wherein a generator design parameter (P₂₄) comprises rated power or rated torque.

14. A method according to claim 12 or claim 13, wherein a bearing construction parameter (P₁₁, P₁₂) comprises a bearing diameter (Ø11, Ø12) or a bearing separation (D).

15. A method according to any of claims 12 to 14, wherein a bearing connector design parameter (P₁₃) comprises any of: number of bearing connectors; mass of a bearing connector; bearing connector material.
